# EUROPEAN PATENT SPECIFICATION

(11) **EP 1 876 804 B1**
(45) Date of publication and mention of the grant of the patent: **01.12.2010**
(21) Application number: 06761623.5
(22) Date of filing: 03.08.2006
(51) Int. Cl.: H04M 3/02, H04M 19/02

(54) **A RING CURRENT CONTROLLING APPARATUS IN COMMUNICATION DEVICE AND A METHOD THEREOF**
RINGSTROMSTEUERVORRICHTUNG IN EINER KOMMUNIKATIONSEINRICHTUNG UND DEREN VERFAHREN
APPAREIL DE COMMANDE D'UNE SONNERIE DANS UN DISPOSITIF DE COMMUNICATION ET PROCEDE ASSOCIE

(30) Priority: 21.12.2005 CN 200510121073
(43) Date of publication of application: 09.01.2008
(73) Proprietor: Huawei Technologies Co., Ltd., Longgang District, Shenzhen Guangdong 518129 (CN)
(72) Inventor: LIN, Jin, Guangdong 518129 (CN); HUO, Hongwei, Guangdong 518129 (CN); CHEN, Gang, Guangdong 518129 (CN); LI, Xianyin, Guangdong 518129 (CN); PAN, Xuefeng, Guangdong 518129 (CN); JIANG, Tianli, Guangdong 518129 (CN); QIN, Zhen, Guangdong 518129 (CN)
(74) Representative: Löfgren, Bengt Håkan Alpo
(86) International application number: PCT/CN2006/001956
(87) International publication number: WO 2007/071138

(56) References cited:
- CN-A- 1 219 816
- CN-A- 1 269 642
- GB-A- 1 560 204
- GB-A- 2 255 689
- US-A- 4 273 964
- US-A- 5 426 695

## Description

### Field of the Invention

The invention relates to a communication device and a control method thereof, and in particular, to a method and a ringing signal device board for controlling a ringing signal in a communication device.

### Background of the Invention

In the prior art, a ringing signal of a subscriber telephone is primarily provided in a centralized manner by a ringing signal device of a communication device. Generally, ringing signals are switched and respectively transmitted to a corresponding subscriber board by a control circuit, and then transmitted to a corresponding subscriber telephone by the corresponding subscriber board.

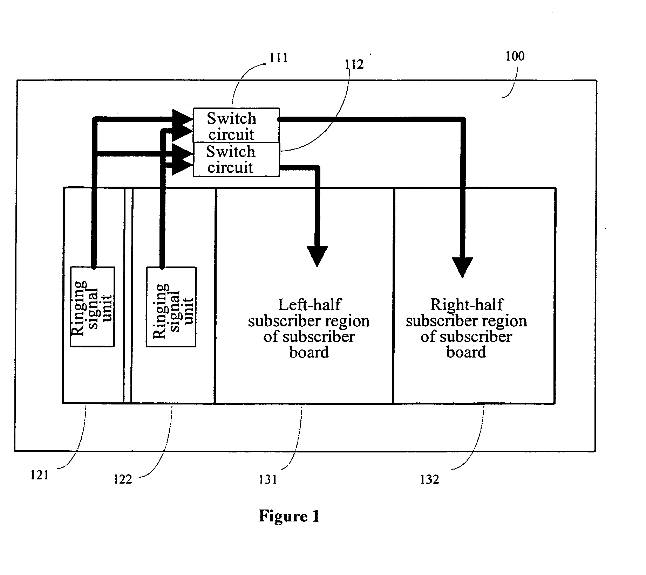

In an existing ringing signal solution for a communication device, switch circuit(s) is(are) provided on a plug-in frame backplane of the communication device. A ringing signal generated by a ringing signal device board is transmitted to a subscriber region via a corresponding switch circuit. A mode of sharing ringing signal load and cooperation between inter-board ringing signals are employed to improve the reliability. Figure 1 shows a block diagram illustrating the functional structure of a plug-in frame backplane of a communication device in the prior art. Generally, switch circuits 111 and 112 are positioned on a backplane 100 of the communication device. The control method is relatively simple. When a ringing signal device board 121 or 122 is in position and a ringing signal is activated, the ringing signal device board 121 or 122 sends a drive signal to the switch circuit 111 (or switch circuit 112) to control the switch circuit 111 (or switch circuit 112). The switch circuit 111 (or switch circuit 112) controls the ringing signal to provide power to a left-half region 131 or a right-half region 132 of the subscriber board according to the status of the drive signal from the ringing signal device board 121 or 122.

However, in the prior art, there are problems such as competition between ringing signal and short circuit of ringing signal output when the ringing signal is activated/deactivated and switched. Further, a ringing signal device board for a typical communication device detects only its own ringing signal, but does not detect the ringing signal status of another ringing signal device board or that of a plug-in frame backplane of the communication device. As a result, in the case that a switch circuit is controlled by a hard switching approach, an instantaneous spike may appear in the ringing signal when the switch circuit is switched, resulting in drawn-arc short circuit in the switch circuit and accordingly damage to the switch circuit.

Furthermore, because a plug-in frame backplane of a communication device typically includes only some elements connected to other parts by pressure, the elements and the resistors are rarely damaged so that a fault rarely occurs in the plug-in frame backplane of an ordinary communication device. However, the plug-in frame backplane of a communication device also acts as a signal connection path for various boards of the communication device. As a result, the communication device will not operate normally in the case that a fault occurs in the plug-in frame backplane of the communication device. Therefore, the plug-in frame backplane of the communication device is required to have a high reliability. However, the switch circuits of the ringing signal control circuit in the prior art are prone to wearing down, which often makes the plug-in frame backplane of the communication device fail to operate normally, thus reducing the reliability of the plug-in frame backplane of the communication device.

Additionally, as described above, a switch circuit(s) is(are) usually provided on a plug-in frame backplane of a communication device, of which a failure rate is higher than that of the pressure connectors and resistors of the plug-in frame backplane of the communication device. So it is difficult to conduct a failure analysis on the plug-in frame backplane which is fabricated integratedly, so that it is difficult to maintain, examine and repair the boards and the plug-in frame backplane of the communication device at a later stage. As a result, it is impossible to correctly determine in a short time which device(s) has(have) a fault leading to the failure of the plug-in frame backplane of the communication device. Thus, the cost of maintenance is very high.

Therefore, the prior art has disadvantages and needs to be improved.

US patent No. 5426695 A discloses a ringing signal control circuit for controlling supply of a ringing signal from a ringing signal generator to a subscriber's line in response to a call signal destined thereto. A switching element is repeatedly switched to connect the ringing signal generator to the subscriber's line under control of a switching signal from a switch controller. In order to suppress a surge voltage due to connection and disconnection of the subscriber's line for the ringing signal generator, a memory stores a time data signal representative of a transition time from a reference voltage level to an optimum voltage level for the subscriber's line. The optimum voltage level is the level at which the connection and disconnection can be carried out without generation of the surge voltage. A voltage comparator compares the ringing signal with the reference voltage to produce a coincident signal. The switch controller receives the coincident signal and reads the time data signal to produce the switching signal at a time delay of the transition time so that the connection and disconnection of the subscriber's line for the ringing signal generator are carried out at the optimum voltage level of the ringing signal.

US patent No. 4273964 A discloses a telephone ringing and tone generating circuit including circuitry for generating a plurality of tones, circuitry for generating a plurality of ringing currents and circuitry for generating a plurality of power voltages. Dual sources of each of the generating circuitry are provided. A timing circuit is provided to provide cadence (timing) signals for each of the tones, currents and voltages. Switching devices corresponding to each of the dual types of generating circuitry are operable to switch from one of the dual circuits to the other. Monitoring circuits are provided to monitor the outputs and on detection of a fault in one type of output to switch from the corresponding on line generating circuitry to the back-up.

### Summary of the Invention

The invention provides a method and a ringing signal device board for controlling a ringing signal in a communication device, so as to enhance the reliability of a plug-in frame backplane of the communication device, and to reduce the difficulty in subsequent maintenance, examination and repairing.

An embodiment of the invention also provides a ringing signal device board for controlling a ringing signal in a communication device, so as to avoid the usage of hard switching control approach of a switch circuit, and to therefore solve the problem of instantaneous spike generated when the ringing signal is switched.

According to an aspect of the invention, there is provided a first ringing signal device board (210) for controlling a ringing signal in a communication device. The first ringing signal device board is used on a plug-in frame backplane (200) of a communication device. The first ringing signal device board (210) includes a first ringing signal unit (211), a first switch circuit (212), and a first control unit (213). The first ringing signal unit (211) is configured to generate the ringing signal. The first switch circuit (212) is adapted to separate the ringing signal from the first ringing signal unit into two in-phase ringing signals, wherein one of the two in-phase ringing signals is output as a main ringing signal of a first subscriber region (232) corresponding to the first ringing signal device board (210), and the other one of the two in-phase ringing signals is output as a support ringing signal of a second subscriber region (231) corresponding to a second ringing signal device board (220); the first switch circuit (212)is further adapted to switch on or off ringing signal output paths of said two in-phase ringing signal. The first control unit(213) is adapted to control the first switch circuit (212) to switch on the ringing signal output path of the one of the two in-phase ringing signals upon the first control unit (213) detects the first ringing signal device board (210) is in an normal status, and to switch on the ringing signal output path of the other one of the two in-phase ringing signals after delaying a certain period of time upon the first control unit(213) detects the second ringing signal device board (220) is in an abnormal status.

According to another aspect of the invention, there is provided a method for controlling a ringing signal from a first ringing signal device board (210) in a communication device, the method includes: separating, by the first switch circuit (212), the ringing signal from the first ringing signal unit into two in-phase ringing signals, wherein one of the two in-phase ringing signals is output as a main ringing signal of a first subscriber region (232) corresponding to the first ringing signal device board (210), and the other one of the two in-phase ringing signals is output as a support ringing signal of a second subscriber region(231) corresponding to a second ringing signal device board (220);
detecting, by the first control unit(213), whether the second ringing signal device board (220) is in an abnormal status; and
controlling, by the first control unit(213), the first switch circuit (212) to switch on the ringing signal output path of the one of the two in-phase ringing signals upon the first control unit(213) detects the first ringing signal device board (210) is in an normal status, and to switch on the ringing signal output path of the other one of the two in-phase ringing signals after delaying a certain period of time upon the first control unit(213) detects the second ringing signal device board (220) is in an abnormal status.

In the first ringing signal device board and the method for controlling a ringing signal in a communication device provided by the invention, the first control unit(213) switching on the ringing signal output path of the other one of the two in-phase ringing signals after delaying a certain period of time upon the first control unit(213) detects the second ringing signal device board (220) is in an abnormal status, because the first control unit(213) introduces a control delay into the processing when detecting the second ringing signal device board (220) is in an abnormal status, it may avoid an instantaneous spike of the ringing signal due to a hard switching of the switch circuit occurred when the second ringing signal device board (220) is in an abnormal status, which could protect the first switch circuit (212) from being damaged by the instantaneous spike of the ringing signal due to a hard switching of the switch circuit.

Furthermore, in the ringing signal device board of the invention, the switch circuit is provided on the ringing signal device board instead of the plug-in frame backplane of a communication device, thereby enhancing the reliability of the plug-in frame backplane of the communication device.

The ringing signal device board of the invention reports the current status of the board based on the obtained information of the ringing signal, thereby decreasing the difficulty in subsequent maintenance, examination and repairing.

### Brief Descriptions of the Drawings

Figure 1 is a schematic block diagram illustrating a ringing signal solution of a communication device in the prior art;

Figure 2 is a schematic block diagram illustrating a ringing signal solution according to the invention.

### Detailed Descriptions of the Embodiments

Some embodiments of the invention will be further described in details below with reference to the accompanying drawings.

In a method for controlling a ringing signal according to an embodiment of the invention, a ringing signal detection signal of a local ringing signal device board, ringing signals of other boards, an activation signal, a ringing signal of a plug-in frame backplane of a communication device, a mate-board-in signal, and a board-insertion signal and the like are sampled. By logical combination and judgment, a switch circuit is controlled to be switched on or off, so as to control the output of the ringing signal and a support switching of the ringing signal. Further, a timing control is added, to avoid a hard switching of switch devices.

In addition, a switch circuit is provided on a ringing signal device board instead of the plug-in frame backplane of the communication device, thereby enhancing the reliability of the plug-in frame backplane of the communication device, and facilitating the subsequent maintenance, examination and repairing. The ringing signal is provided to a subscriber board in a load sharing mode, thereby reducing the load of the ringing signal, and extending the lifetime of the ringing signal.

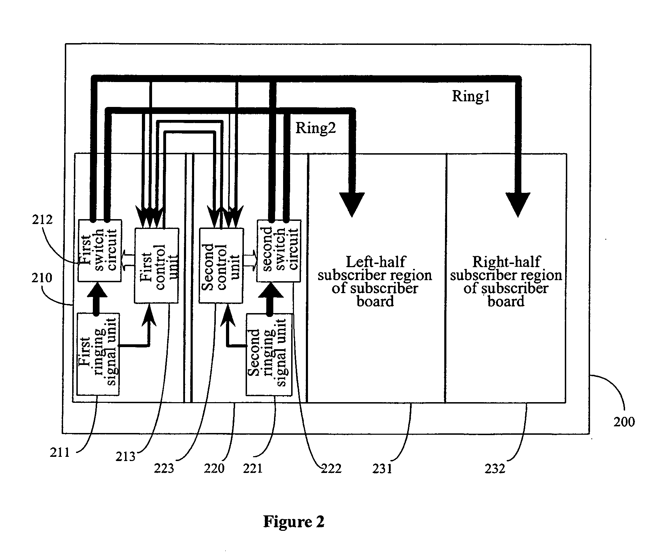

Figure 2 shows a block diagram of the technical principle of an embodiment of the invention. In the embodiment, a plug-in frame backplane 200 of a communication device is provided with a first ringing signal device board 210, a second ringing signal device board 220, and a subscriber board divided into a left-half subscriber region 231 and a right-half subscriber region 232.

The first ringing signal device board 210 includes a first ringing signal unit 211, a first switch circuit 212, and a first control unit 213 related to the first switch circuit 212.

The second ringing signal device board 220 includes a second ringing signal unit 221, a second switch circuit 222, and a second control unit 223 related to the second switch circuit 222.

In the embodiment, a ringing signal is provided in a load sharing manner for both of the subscriber regions 231 and 232 of the subscriber board. The ringing signal of the first ringing signal device board 210 is separated into two in-phase ringing signals through the first switch circuit 212. One of the two in-phase ringing signals is output as a main ringing signal of the right-half subscriber region 232, and the other is output as a support ringing signal of the left-half subscriber region 231. The load sharing mode may be implemented by using the prior art technology, which will not be described herein. The first switch circuit 212 may be divided into a main switch circuit and a support switch circuit. Similarly, the second switch circuit 222 of the second ringing signal device board 220 may also be divided into a main switch circuit and a support switch circuit.

The first control unit 213 is employed to decide the on/off of the main ringing signal of the first ringing signal device board and the support ringing signal of the first ringing signal device board, the latter by means of the condition of the ringing signals interpreted by the second control unit 223. The first control unit 213 is provided with a detection unit (not shown), which is connected to the plug-in frame backplane 200 of the communication device, the first ringing signal unit 211 of the first ringing signal device board 210, a ringing signal output path of the first ringing signal device board 210, a ringing signal output path of the second ringing signal device board 220, and the second control unit 223 of the second ringing signal device board 220, in order to obtain the status information of the plug-in frame backplane 200 of the communication device, and the first and second ringing signal device board 210 and 220.

Typically, the above described status information is obtained by a physical circuit connection. The obtaining of the status information includes procedures such as obtaining a reference signal (such as a voltage or current) of the plug-in frame backplane 200 of the communication device as well as the first and second ringing signal device board 210 and 220; and converting the reference signal to a detection signal.

The first control unit 213 logically combines and judges based on the status information of the plug-in frame backplane 200 of the communication device as well as the first and second ringing signal device board 210 and 220, then sends a control instruction to the first switch circuit 212 to control the on/off of the first switch circuit 212, so as to control the output of the main ringing signal and the support ringing signal.

Similarly, the second control unit 223 of the second ringing signal device board 220 logically combines and judges based on the status information of the plug-in frame backplane 200 of the communication device as well as the first and second ringing signal device board 210 and 220, then controls the output of the main ringing signal and the support ringing signal by controlling the on/off of the second switch circuit 222.

It shall be appreciated that the logical combination and judgment may be performed by logical combination and judgment units in the control units.

Generally, the first and second control units 213 and 223 may be implemented with a Micro Controller Unit (MCU) or a logic chip. The MCU or logic chip in the first or second control unit 213 or 223 detects in real time the status of ringing signal in its respective ringing signal device board, the status of ringing signal of the plug-in frame backplane of the entire communication device, and signals sent by the second ringing signal device board including a mate-board-in signal, a board-insertion signal, and a board on/off signal and the like. The MCU or logic chip sends a control instruction to the first or second switch circuit 212 or 222 by logical combination and judgment based on the detected information, and controls the output of the main ringing signal and the support ringing signal by controlling the on/off of the first or second switch circuit 212 or 222.

In the communication device and method according to the invention, the first ringing signal device board 210 and the second ringing signal device board 220 perform logical combination and judgment based on the detected signal.

An exemplary procedure of the logical combination and judgment is shown below.

In the MCU or logic chip of a ringing signal device board, an OR operation is performed to a ringing signal of the ringing signal device board, a ringing signal of other ringing signal device board, and a signal indicating that the ringing signal device board is securely inserted in position. The result of the operation is taken as a ringing signal health flag of the board. e.g., a low level may represent a healthy status by default, and a high level may represent an abnormal status (alternatively, a high level may represent a healthy status, and a low level may represent an abnormal status). When any of the three signals described above is of a high level, the ringing signal health flag of the ringing signal device board is a high level, indicating that the own ringing signal device board is in an abnormal status. The abnormal status of the ringing signal device board may be notified to another ringing signal device board. The ringing signal health flag may be transferred to the another ringing signal device board as an inter-sending signal transferred between two ringing signal device boards. In the case that there is only one ringing signal device board, a pull-up resistor process (or a pull-down resistor process) may be performed to the inter-sending signal inside the ringing signal device board.

When there is only one ringing signal device board in the plug-in frame of the first and second ringing signal device board 210 and 220, according to a detected ringing signal health status of the ringing signal device board, the levels of a main ringing signal of the backplane and a support ringing signal, and the level the inter-sending signal (When there is only one ringing signal device board, a pull-up resister process or a pull-down process is performed to the inter-sending signal inside the ringing signal device board), the MCU or logic chip regards a low level as normal, and a high level as abnormal by default (alternatively, a high level may be regarded as normal, and a low level as abnormal be default). If it is detected that the ringing signal health status of the ringing signal device board is normal and both levels of the main ringing signal of the backplane and the support ringing signal are of a low level, then the inter-sending signal is of a high level, because there is only one ringing signal device board. The MCU or logic chip sends a control signal to drive the switch circuit, so that both the main ringing signal and the support ringing signal of the ringing signal device board are output so as to be provided to the entire subscriber region.

If both the first and second ringing signal device boards 210 and 220 are in position, and only one of the first and second ringing signal device board 210 and 220 is activated while the other one is deactivated, then the status is the same as when there is only one ringing signal device board as described above. At this time, both main switch circuit and support switch circuit of the activated ringing signal device board are switched on, and the main ringing signal and the support ringing signal are provided to the entire subscriber region.

When both the first and second ringing signal device boards 210 and 220 are in position and activated, if the ringing signals of the first and second ringing signal device boards 210 and 220 are detected as in a healthy status, and the inter-sending signal is also of a normal level (a low level), then based on the detected health status of the ringing signals and the status of ringing signal of the backplane, the MCUs or logic chips of the first and second ringing signal device boards 210 and 220 send out control signals to switch on the main switch circuits, and to switch off the support switch circuits. In this way, the right-half or left-half subscriber region is supplied by the first or second ringing signal device boards 210 or 220 respectively.

When both the first and second ringing signal device boards 210 and 220 are in position and activated, if one of the first and second ringing signal device boards 210 and 220 is in an ill health status, then the MCU or logic chip of the ringing signal device board in the ill health status switches off the main switch circuit and the support switch circuit, according to the detected ill health status of the ringing signal device board, in order to prevent the support ringing signal from being reversed. The normal ringing signal device board determines that the ringing signal of the ringing signal device board in ill health status is in an abnormal status, according to the detected status of the ringing signal of the backplane and the level of the signal sent by the ringing signal device board in ill health status. After delaying a certain period of time, the MCU or logic chip of the normal ringing signal device board drives the support switch circuit to be switched on. The support ringing signal of the normal ringing signal device board is output to the subscriber region.

If the ringing signal of the ringing signal device board in an ill health status recovers its healthy status, the normal ringing signal device board switched off the support switch circuit according to the level of the inter-sending signal. At this time, the MCU or logic chip of the recovered ringing signal device board sends out a control signal, according to the detected status of ringing signal of the backplane and the health status of the recovered ringing signal device board, so as to switch on the main switch circuit and to switch off the support switch circuit, In this way, the first and the second ringing signal device boards may power the left-half and right-half subscriber regions respectively.

A ringing signal is an alternating current signal at a certain frequency. When a main ringing signal and a support ringing signal are activated to control the switching of a switch circuit, the MCU or logic chip introduces a control delay into the processing, in order to avoid an instantaneous spike of the ringing signal due to a hard switching of the switch circuit occurred when the ringing signal is activated/deactivated or due to the cooperation between the ringing signals. It will be appreciated by the ordinary skilled in the art that the control delay is that a delay control is introduced in a control signal of the switch circuit after an abnormal signal is detected, instead of providing the control signal immediately after the abnormal signal is detected. This will not be described herein.

Under the architecture of the communication device described above, the switch circuits of the first and second ringing signal device boards 210 and 220 are switched off by default according to an embodiment of the method in the invention, so as to prevent the ringing signal from being reversed when the ringing signal of the first or second ringing signal device board 210 or 220 is activated while the ringing signal of the other the ringing signal device board 220 or 210 is deactivated.

In the method of the invention, if all the ringing signals output from the first and second ringing signal device boards 210 and 220 are normal, the MCUs or logic chips control to switched on the main switch circuits supplying local subscriber regions, and to switch off the support switch circuits. The ringing signal of a corresponding slot is provided to a corresponding subscriber region. In other words, the main ringing signal of the left-half subscriber region 231 of a subscriber board is provided by the second ringing signal device board 220, and the support ringing signal is provided by the first ringing signal device board 210; while the main ringing signal of the right-half subscriber region 232 is provided by the first ringing signal device board 210, and the support ringing signal is provided by the second ringing signal device board 220.

When there is only one ringing signal device board in the plug-in frame of the first and second ringing signal device board 210 and 220, or when one of the two boards has a ringing signal fault, the ringing signal device board 210 (220) logically judges according to the detected levels of signals, and controls to switched on the main switch circuit and the support switch circuit. Thus, only one ringing signal device board may be used to supply ringing signals to both the right-half and left-half subscriber regions of the entire backplane. The switch circuit of the ringing signal device board having a ringing signal fault is switched off, so as to prevent the support ringing signal from being reversed.

It should be noted that in the above embodiment of the invention, two ringing signal device boards are used for cooperative support and backup of ringing signals. However, it is apparent that more than one pair of ringing signal device boards may be provided in one plug-in frame backplane of a communication device, or one ringing signal device board may be used as a backup of other ringing signal device boards. These are simple extensions to the above described solutions according to the invention, and falls within the protection scope of the invention.

In the method and communication device of the invention, a load sharing mode in which a subscriber region is divided into at least two regions is used. In this way, the load of ringing signal of a ringing signal device board is reduced, and the lifetime of the ringing signal is extended. In addition, an MCU or logic chip is employed to detect a ringing signal of local ringing signal device board, a ringing signal of a plug-in frame backplane of a communication device, and an inter-sending signal, while a timing control is also employed. As a result, the problems, such as hard switching of a switch device when a ringing signal is activated or switched, drawn-arc of the ringing signal when a switch circuit is switched, as well as short circuit of a main ringing signal of the ringing signal device board 210 (220) and a support ringing signal of the ringing signal device board 220 (210), may be avoided, so that the reliability of the switch device may be improved.

In the above ringing signal device board and communication device of the invention, an MCU or logic chip reports the current status of the ringing signal device board based on information sampled from the ringing signal, and the switch circuit is provided on the ringing signal device board instead of a plug-in frame backplane of a communication device. In this way, only the ringing signal device board needs replacing without the need of disassembling the backplane, when the fault-susceptible switch circuit has a fault and needs maintenance. As a result, the reliability of the plug-in frame backplane of the communication device is enhanced, and the difficulty of subsequent maintenance, examination and repairing is reduced.

It shall be appreciated that though some embodiments of the invention has been described in details, the embodiments should not be considered as a limit to the protection scope of the invention which should be defined by the appended claims.

## Claims

1. A first ringing signal device board (210) for controlling a ringing signal in a communication device and adapted to be connected to a plug-in frame backplane (200) of said communication device, said first ringing signal device board (210) comprising a first ringing signal unit (211) configured to generate the ringing signal, **characterized in that** said first ringing signal device board (210) further comprises:
a first switch circuit (212), adapted to separate the ringing signal from the first ringing signal unit into two in-phase ringing signals, wherein one of the two in-phase ringing signals is output as a main ringing signal of a first subscriber region(232) corresponding to the first ringing signal device board (210), and the other one of the two in-phase ringing signals is output as a support ringing signal of a second subscriber region(231) corresponding to a second ringing signal device board (220), and the first switch circuit (212)is further adapted to switch on or off ringing signal output paths of said two in-phase ringing signal, and
a first control unit(213), adapted to control the first switch circuit (212) to switch on the ringing signal output path of the one of the two in-phase ringing signals upon the first control unit(213) detects the first ringing signal device board (210) is in an normal status, and to switch on the ringing signal output path of the other one of the two in-phase ringing signals after delaying a certain period of time upon the first control unit(213) detects the second ringing signal device board (220) is in an abnormal status

2. The first ringing signal device board according to claim 1, **characterized in, that** said first control unit (213) comprises a first detection unit and a logical judgment unit, the first detection unit is adapted to obtain status information from said plug-in frame backplane (200), said first ringing signal device board (210) and said second ringing signal device board (220) , said logical judgment unit is adapted to determine whether the first ringing signal device board (210) and said second ringing signal device board (220) is in an normal status or in an abnormal status according to said information obtained by said first detection unit, and exercise said switch on control of the ringing signal output paths of the two in-phase ringing signals according to the determining result.

3. The first ringing signal device board according to claim 2, **characterized in, that** said logical judgment unit is adapted to employ timing control to avoid hard switching of said first switch circuit(212).

4. The first ringing signal device board according to any preceding claim, **characterized in that** said first control unit (213) is a Micro Controller Unit or a logic chip.

5. The first ringing signal device board according to any one of claims 2 to 4, **characterized in that** said first detection unit is adapted to obtain information from the ringing signal output by said first ringing signal device board (210), and from a ringing signal output by said second ringing signal device board (210)through a connection to said plug-in frame backplane(200).

6. A communication device, comprising a plug-in frame backplane (200), **characterized in that**, at least a first ringing signal device board (210) and a second ringing signal device board (220) according to any one of claims 1 to 5 are connected to said plug-in frame backplane (200), and that said first ringing signal device board (210) and said second ringing signal device board (220) are adapted to form a pair of ringing signal device boards for cooperative support and back-up of ringing signals.

7. A communication device, comprising a plug-in frame backplane (200), **characterized in that**, at least a first ringing signal device board (210) and a second ringing signal device board (220) according to any one of claims 1 to 5 are connected to said plug-in frame backplane (200), and that any one of said first ringing signal device board (210) and said second ringing signal device board (220) is adapted to be used for cooperative support and back-up of ringing signals of any other of said at least two ringing signal device boards.

8. A method for controlling a ringing signal from a first ringing signal device board (210) in a communication device, the first ringing signal device board (210) comprises a first ringing signal unit (211) configured to generate the ringing signal, a first switch circuit (212), and a first control unit(213), **characterized by**
separating, by the first switch circuit (212), the ringing signal from the first ringing signal unit into two in-phase ringing signals, wherein one of the two in-phase ringing signals is output as a main ringing signal of a first subscriber region (232) corresponding to the first ringing signal device board (210), and the other one of the two in-phase ringing signals is output as a support ringing signal of a second subscriber region(231) corresponding to a second ringing signal device board (220);
detecting, by the first control unit(213), whether the second ringing signal device board (220) is in an abnormal status; and
controlling, by the first control unit(213), the first switch circuit (212) to switch on the ringing signal output path of the one of the two in-phase ringing signals upon the first control unit(213) detects the first ringing signal device board (210) is in an normal status, and to switch on the ringing signal output path of the other one of the two in-phase ringing signals after delaying a certain period of time upon the first control unit(213) detects the second ringing signal device board (220) is in an abnormal status.

9. The method according to claim 8, **characterized in that** switching on the switch circuit comprises sending a control delay to the switch circuit.

10. The method according to claim 8, the second ringing signal device board (220) comprises a second switch circuit (222), **characterized by** further comprising: when ringing signals output from the first ringing signal device board (210) and the second ringing signal device board (220) connected to a same subscriber region both are normal, controlling the first switch circuit (212) of the first ringing signal device board (210) and the second switch circuit (222) of the second ringing signal device board (220) to switch on said one of the two in-phase ringing signals corresponding to the subscriber region, and to switch off said the other one of the two in-phase ringing signals.

11. The method according to claim 10, **characterized by** further comprising: when the second ringing signal device board (220) is detected to have a fault, controlling the second switch circuit (222)to switch off the ringing signal paths of the two in-phase ringing signals from the second switch circuit (222) connected to the corresponding subscriber region, and to switch on a ringing signal path of two in-phase ringing signals from the first ringing signal device board (210)connected to the corresponding subscriber region.

12. The method according to claim 11, **characterized by** further comprising: when the second ringing signal device board (220) recovers its normal status, controlling the first switch circuit (212) to switch off the ringing signal path of the first ringing signal device board (210), and controlling the second switch circuit (222) to switch on the ringing signal path of the second ringing signal device board (220).

13. The method according to any one of claims 8 to 12, **characterized in that**, the first control unit(213) detecting the whether the second ringing signal device board (220) is in an abnormal status by detecting a status of the second ringing signal device board (220).

14. The method according to claim 13, **characterized in that**, the status of the second ringing signal device board (220) comprises a mate-board-in signal, a board-insertion signal, and a board on/off signal.

## Patentansprüche

1. Erste Rufsignalgerätekarte (210) zum Steuern eines Rufsignals in einem Kommunikationsgerät, die dafür ausgelegt ist, mit einer Einsteckrahmen-Backplane (200) des Kommunikationsgeräts verbunden zu werden, wobei die erste Rufsignalgerätekarte (210) eine erste Rufsignaleinheit (211) umfasst, die dafür konfiguriert ist, das Rufsignal zu erzeugen, **dadurch gekennzeichnet, dass** die erste Rufsignalgerätekarte (210) ferner Folgendes umfasst:
ein erster Schaltkreis (212), der dafür ausgelegt ist, das Rufsignal aus der ersten Rufsignaleinheit in zwei gleichphasige Rufsignale aufzutrennen, wobei eines der zwei gleichphasigen Rufsignale als ein Hauptrufsignal einer ersten Teilnehmerregion (232) ausgegeben wird, die der ersten Rufsignalgerätekarte (210) entspricht, und das andere der zwei gleichphasigen Rufsignale als ein Unterstützungsrufsignal einer zweiten Teilnehmerregion (231) ausgegeben wird, die einer zweiten Rufsignalgerätekarte (220) entspricht, und der erste Schaltkreis (212) ferner dafür ausgelegt ist, Rufsignal-Ausgangspfade der zwei gleichphasigen Rufsignale ein- oder auszuschalten, und
eine erste Steuereinheit (213), die dafür ausgelegt ist, den ersten Schaltkreis (212) zu steuern, um den Rufsignal-Ausgangspfad des einen der zwei gleichphasigen Rufsignale einzuschalten, wenn die erste Steuereinheit (213) detektiert, dass sich die erste Rufsignalgerätekarte (210) in einem normalen Status befindet, und den Rufsignal-Ausgangspfad des anderen der zwei gleichphasigen Rufsignale nach Verzögerung um einen bestimmten Zeitraum einzuschalten, wenn die erste Steuereinheit (213) detektiert, dass sich die zweite Rufsignalgerätekarte (220) in einem abnormen Status befindet.

2. Erste Rufsignalgerätekarte nach Anspruch 1, **dadurch gekennzeichnet, dass** die erste Steuereinheit (213) eine erste Detektionseinheit und eine logische Entscheidungseinheit umfasst, die erste Detektionseinheit dafür ausgelegt ist, Statusinformationen aus der Einsteckrahmen-Backplane (200), der ersten Rufsignalgerätekarte (210) und der zweiten Rufsignalgerätekarte (220) zu erhalten, und die logische Entscheidungseinheit dafür ausgelegt ist, gemäß den durch die erste Detektionseinheit erhaltenen Informationen zu bestimmen, ob sich die erste Rufsignalgerätekarte (210) und die zweite Rufsignalgerätekarte (220) in einem normalen Status oder in einem abnormen Status befinden, und die Einschaltsteuerung der Rufsignal-Ausgangspfade der zwei gleichphasigen Rufsignale gemäß dem Bestimmungsergebnis auszuüben.

3. Erste Rufsignalgerätekarte nach Anspruch 2, **dadurch gekennzeichnet, dass** die logische Entscheidungseinheit dafür ausgelegt ist, Zeitsteuerung zu verwenden, um ein hartes Schalten des ersten Schaltkreises (212) zu vermeiden.

4. Erste Rufsignalgerätekarte nach einem der vorhergehenden Ansprüche, **dadurch gekennzeichnet, dass** die erste Steuereinheit (213) eine Mikrocontrollereinheit oder ein Logikchip ist.

5. Erste Rufsignalgerätekarte nach einem der Ansprüche 2 bis 4, **dadurch gekennzeichnet, dass** die erste Detektionseinheit dafür ausgelegt ist, Informationen aus dem durch die erste Rufsignalgerätekarte (210) ausgegebenen Rufsignal und aus einem durch die zweite Rufsignalgerätekarte (220) ausgegebenen Rufsignal durch eine Verbindung mit der Einsteckrahmen-Backplane (200) zu erhalten.

6. Kommunikationsgerät, das eine Einsteckrahmen-Backplane (200) umfasst, **dadurch gekennzeichnet, dass** mindestens eine erste Rufsignalgerätekarte (210) und eine zweite Rufsignalgerätekarte (220) nach einem der Ansprüche 1 bis 5 mit der Einsteckrahmen-Backplane (200) verbunden sind und dass die erste Rufsignalgerätekarte (210) und die zweite Rufsignalgerätekarte (220) dafür ausgelegt sind, ein Paar von Rufsignalgerätekarten für kooperative Unterstützung und Backup von Rufsignalen zu bilden.

7. Kommunikationsgerät, das eine Einsteckrahmen-Backplane (200) umfasst, **dadurch gekennzeichnet, dass** mindestens eine erste Rufsignalgerätekarte (210) und eine zweite Rufsignalgerätekarte (220) nach einem der Ansprüche 1 bis 5 mit der Einsteckrahmen-Backplane (200) verbunden sind und dass eine beliebige der ersten Rufsignalgerätekarte (210) und der zweiten Rufsignalgerätekarte (220) dafür ausgelegt ist, für kooperative Unterstützung und Backup von Rufsignalen beliebiger anderer der mindestens zwei Rufsignalgerätekarten verwendet zu werden.

8. Verfahren zum Steuern eines Rufsignals aus einer ersten Rufsignalgerätekarte (210) in einem Kommunikationsgerät, wobei die erste Rufsignalgerätekarte (210) eine erste Rufsignaleinheit (211), die dafür konfiguriert ist, das Rufsignal zu erzeugen, einen ersten Schaltkreis (212) und eine erste Steuereinheit (213) umfasst, **gekennzeichnet durch** die folgenden Schritte:
Auftrennen des Rufsignals aus der ersten Rufsignaleinheit **durch** den ersten Schaltkreis (212) in zwei gleichphasige Rufsignale, wobei eines der zwei gleichphasigen Rufsignale als ein Hauptrufsignal einer ersten Teilnehmerregion (232) ausgegeben wird, die der ersten Rufsignalgerätekarte (210) entspricht, und das andere der zwei gleichphasigen Rufsignale als ein Unterstützungsrufsignal einer zweiten Teilnehmerregion (231) ausgegeben wird, die einer zweiten Rufsignalgerätekarte (220) entspricht;
Detektieren **durch** die erste Steuereinheit (213), ob sich die zweite Rufsignalgerätekarte (220) in einem abnormen Status befindet; und
Steuern des ersten Schaltkreises (212) **durch** die erste Steuereinheit (213), um den Rufsignal-Ausgangspfad des einen der zwei gleichphasigen Rufsignale einzuschalten, wenn die erste Steuereinheit (213) detektiert, dass sich die erste Rufsignalgerätekarte (210) in einem normalen Status befindet, und den Rufsignal-Ausgangspfad des anderen der zwei gleichphasigen Rufsignale nach Verzögerung um einen bestimmten Zeitraum einzuschalten, wenn die erste Steuereinheit (213) detektiert, dass sich die zweite Rufsignalgerätekarte (220) in einem abnormen Status befindet.

9. Verfahren nach Anspruch 8, **dadurch gekennzeichnet, dass** das Einschalten des Schaltkreises das Senden einer Steuerverzögerung zu dem Schaltkreis umfasst.

10. Verfahren nach Anspruch 8, wobei die zweite Rufsignalgerätekarte (220) einen zweiten Schaltkreis (222) umfasst, **dadurch gekennzeichnet, dass** er ferner Folgendes umfasst: wenn aus der ersten Rufsignalgerätekarte (210) und der zweiten Rufsignalgerätekarte (220), die mit einer selben Teilnehmerregion verbunden ist, ausgegebene Rufsignale beide normal sind, Steuern des ersten Schaltkreises (212) der ersten Rufsignalgerätekarte (210) und des zweiten Schaltkreises (222) der zweiten Rufsignalgerätekarte (220), um eines der zwei gleichphasigen Rufsignale entsprechend der Teilnehmerregion einzuschalten und das andere der zwei gleichphasigen Rufsignale auszuschalten.

11. Verfahren nach Anspruch 10, **dadurch gekennzeichnet, dass** es ferner Folgendes umfasst: wenn detektiert wird, dass die zweite Rufsignalgerätekarte (220) einen Fehler aufweist, Steuern des zweiten Schaltkreises (222), um die Rufsignalpfade der zwei gleichphasigen Rufsignale aus dem zweiten Schaltkreis (222), der mit der entsprechenden Teilnehmerregion verbunden ist, auszuschalten und einen Rufsignalpfad von zwei gleichphasigen Rufsignalen aus der ersten Rufsignalgerätekarte (210), die mit der entsprechenden Teilnehmerregion verbunden ist, einzuschalten.

12. Verfahren nach Anspruch 11, **dadurch gekennzeichnet, dass** es ferner Folgendes umfasst: wenn die zweite Rufsignalgerätekarte (220) ihren normalen Status zurückerlangt, Steuern des ersten Schaltkreises (212), um den Rufsignalpfad der ersten Rufsignalgerätekarte (210) auszuschalten, und Steuern des zweiten Schaltkreises (222), um den Rufsignalpfad der zweiten Rufsignalgerätekarte (220) einzuschalten.

13. Verfahren nach einem der Ansprüche 8 bis 12, **dadurch gekennzeichnet, dass** die erste Steuereinheit (213) durch Detektieren eines Status der zweiten Rufsignalgerätekarte (220) detektiert, ob sich die zweite Rufsignalgerätekarte (220) in einem abnormen Status befindet.

14. Verfahren nach Anspruch 13, **dadurch gekennzeichnet, dass** der Status der zweiten Rufsignalgerätekarte (220) ein Verbindungspartner-Karte-Eingesteckt-Signal, ein Karteneinfügesignal und ein Karte-Ein/Aus-Signal umfasst.

## Revendications

1. Première carte de dispositif de signal de sonnerie (210) pour commander un signal de sonnerie dans un dispositif de communication et adaptée pour être connectée à un fond de panier enfichable (200) dudit dispositif de communication, ladite première carte de dispositif de signal de sonnerie (210) comprenant une première unité de signal de sonnerie (211) configurée pour générer le signal de sonnerie, **caractérisée en ce que** ladite première carte de dispositif de signal de sonnerie (210) comprend en outre :
un premier circuit de commutation (212), adapté pour séparer le signal de sonnerie provenant de la première unité de signal de sonnerie en deux signaux de sonnerie en phase, l'un des deux signaux de sonnerie en phase étant sorti sous forme de signal de sonnerie principal d'une première région d'abonné (232) correspondant à la première carte de dispositif de signal de sonnerie (210), et l'autre des deux signaux de sonnerie en phase étant sorti sous forme de signal de sonnerie de support d'une seconde région d'abonné (231) correspondant à une seconde carte de dispositif de signal de sonnerie (220), et le premier circuit de commutation (212) étant adapté en outre pour activer ou désactiver des chemins de sortie de signaux de sonnerie desdits deux signaux de sonnerie en phase, et
une première unité de commande (213), adaptée pour commander le premier circuit de commutation (212) afin d'activer le chemin de sortie de signal de sonnerie de l'un des deux signaux de sonnerie en phase quand la première unité de commande (213) détecte que la première carte de dispositif de signal de sonnerie (210) se trouve dans un état normal, et d'activer le chemin de sortie de signal de sonnerie de l'autre des deux signaux de sonnerie en phase après un retard d'une certaine période de temps lorsque la première unité de commande (213) détecte que la seconde carte de dispositif de signal de sonnerie (220) se trouve dans un état anormal.

2. Première carte de dispositif de signal de sonnerie selon la revendication 1, **caractérisée en ce que** ladite première unité de commande (213) comprend une première unité de détection et une unité de jugement logique, la première unité de détection est adaptée pour obtenir des informations d'état depuis ledit fond de panier enfichable (200), ladite première carte de dispositif de signal de sonnerie (210) et ladite seconde carte de dispositif de signal de sonnerie (220), ladite unité de jugement logique est adaptée pour déterminer si la première carte de dispositif de signal de sonnerie (210) et ladite seconde carte de dispositif de signal de sonnerie (220) se trouvent dans un état normal ou dans un état anormal en fonction desdites informations obtenues par ladite première unité de détection, et exercer ladite commande d'activation des chemins de sortie de signal de sonnerie des deux signaux de sonnerie en phase en fonction du résultat de la détermination.

3. Première carte de dispositif de signal de sonnerie selon la revendication 2, **caractérisée en ce que** ladite unité de jugement logique est adaptée pour employer une commande de cadencement afin d'éviter une commutation définitive dudit premier circuit de commutation (212).

4. Première carte de dispositif de signal de sonnerie selon l'une quelconque des revendications précédentes, **caractérisée en ce que** ladite première unité de commande (213) est une Unité de Microcontrôleur ou une puce logique.

5. Première carte de dispositif de signal de sonnerie selon l'une quelconque des revendications 2 à 4, **caractérisée en ce que** ladite première unité de détection est adaptée pour obtenir des informations à partir du signal de sonnerie sorti par ladite première carte de dispositif de signal de sonnerie (210), et à partir d'un signal de sonnerie sorti par ladite seconde carte de dispositif de signal de sonnerie (220) par le biais d'une connexion avec ledit fond de panier enfichable (200).

6. Dispositif de communication, comprenant un fond de panier enfichable (200), **caractérisé en ce qu'**au moins une première carte de dispositif de signal de sonnerie (210) et une seconde carte de dispositif de signal de sonnerie (220) selon l'une quelconque des revendications 1 à 5 sont connectées audit fond de panier enfichable (200), et **en ce que** ladite première carte de dispositif de signal de sonnerie (210) et ladite seconde carte de dispositif de signal de sonnerie (220) sont adaptées pour former une paire de cartes de dispositif de signal de sonnerie pour un support et une sauvegarde coopératifs des signaux de sonnerie.

7. Dispositif de communication, comprenant un fond de panier enfichable (200), **caractérisé en ce qu'**au moins une première carte de dispositif de signal de sonnerie (210) et une seconde carte de dispositif de signal de sonnerie (220) selon l'une quelconque des revendications 1 à 5 sont connectées audit fond de panier enfichable (200), et **en ce que** n'importe laquelle de ladite première carte de dispositif de signal de sonnerie (210) et de ladite seconde carte de dispositif de signal de sonnerie (220) est adaptée pour servir au support et à la sauvegarde coopératifs des signaux de sonnerie d'une autre quelconque desdites au moins deux cartes de dispositif de signal de sonnerie.

8. Procédé de commande d'un signal de sonnerie provenant d'une première carte de dispositif de signal de sonnerie (210) dans un dispositif de communication, la première carte de dispositif de signal de sonnerie (210) comprenant une première unité de signal de sonnerie (211) configurée pour générer le signal de sonnerie, un premier circuit de commutation (212) et une première unité de commande (213), **caractérisé par**
la séparation, par le premier circuit de commutation (212), du signal de sonnerie provenant de la première unité de signal de sonnerie en deux signaux de sonnerie en phase, l'un des deux signaux de sonnerie en phase étant sorti sous forme de signal de sonnerie principal d'une première région d'abonné (232) correspondant à la première carte de dispositif de signal de sonnerie (210), et l'autre des deux signaux de sonnerie en phase étant sorti sous forme de signal de sonnerie de support d'une seconde région d'abonné (231) correspondant à une seconde carte de dispositif de signal de sonnerie (220) ;
la détection, par la première unité de commande (213), si la seconde carte de dispositif de signal de sonnerie (220) se trouve ou non dans un état anormal ; et
la commande, par la première unité de commande (213), du premier circuit de commutation (212) afin d'activer le chemin de sortie de signal de sonnerie dudit un des deux signaux de sonnerie en phase quand la première unité de commande (213) détecte que la première carte de dispositif de signal de sonnerie (210) se trouve dans un état normal, et d'activer le chemin de sortie de signal de sonnerie de l'autre des deux signaux de sonnerie en phase après un retard d'une certaine période de temps lorsque la première unité de commande (213) détecte que la seconde carte de dispositif de signal de sonnerie (220) se trouve dans un état anormal.

9. Procédé selon la revendication 8, **caractérisé en ce que** l'activation du circuit de commutation comprend l'envoi d'un retard de commande au circuit de commutation.

10. Procédé selon la revendication 8, la seconde carte de dispositif de signal de sonnerie (220) comprenant un second circuit de commutation (222), **caractérisé en ce qu'**il comprend en outre : quand les signaux de sortie sortant de la première carte de dispositif de signal de sonnerie (210) et de la seconde carte de dispositif de signal de sonnerie (220) connectées à une même région d'abonné sont normaux, la commande du premier circuit de commutation (212) de la première carte de dispositif de signal de sonnerie (210) et du second circuit de commutation (222) de la seconde carte de dispositif de signal de sonnerie (220) pour activer ledit un des deux signaux de sonnerie en phase correspondant à la région d'abonné, et désactiver ledit autre des deux signaux de sonnerie en phase.

11. Procédé selon la revendication 10, **caractérisé en ce qu'**il comprend en outre : quand il est détecté que ladite seconde carte de dispositif de signal de sonnerie (220) comporte une anomalie, la commande du second circuit de commutation (222) pour désactiver les chemins de signaux de sonnerie des deux signaux de sonnerie en phase provenant du second circuit de commutation (222) connecté à la région d'abonné correspondante, et activer un chemin de signal de sonnerie des deux signaux de sonnerie en phase provenant de la première carte de dispositif de signal de sonnerie (210) connectée à la région d'abonné correspondante.

12. Procédé selon la revendication 11, **caractérisé en ce qu'**il comprend en outre : quand la seconde carte de dispositif de signal de sonnerie (220) reprend son état normal, la commande du premier circuit de commutation (212) pour désactiver le chemin de signal de sonnerie de la première carte de dispositif de signal de sonnerie (210), et la commande du second circuit de commutation (222) pour activer le chemin de signal de sonnerie de la seconde carte de dispositif de signal de sonnerie (220).

13. Procédé selon l'une quelconque des revendications 8 à 12, **caractérisé en ce que** la première unité de commande (213) détecte si la seconde carte de dispositif de signal de sonnerie (220) est ou non dans un état anormal en détectant un état de la seconde carte de dispositif de signal de sonnerie (220).

14. Procédé selon la revendication 13, **caractérisé en ce que** l'état de la seconde carte de dispositif de signal de sonnerie (220) comprend un signal de carte complémentaire insérée, un signal d'insertion de carte et un signal de carte allumée/éteinte.
